# FASCICULE DE BREVET EUROPEEN

(11) **EP 4 140 835 B1**
(45) Date de publication et mention de la délivrance du brevet: **20.11.2024**
(21) Numéro de dépôt: 22191764.4
(22) Date de dépôt: 23.08.2022
(51) Int. Cl.: B60S 1/48, B60S 1/02

(54) **PROCÉDÉ ET SYSTÈME DE DÉGIVRAGE D'UNE SURFACE VITRÈE D'UN VÉHICULE**
VERFAHREN UND SYSTEM ZUR ENTEISUNG EINER GLASFLÄCHE EINES FAHRZEUGS
METHOD AND SYSTEM FOR DE-ICING A GLAZED SURFACE OF A VEHICLE

(30) Priorité: 31.08.2021 FR 2109097
(43) Date de publication de la demande: 01.03.2023
(73) Titulaire: Valeo Systèmes d'Essuyage, 78322 Le Mesnil Saint Denis (FR)
(72) Inventeur: FILLOUX, Alexandre, 78321 LE MESNIL SAINT DENIS (FR)
(74) Mandataire: Valeo Visibility

(56) Documents cités:
- DE-A1- 102009 051 263
- FR-A1- 2 957 881
- FR-A1- 2 973 293
- FR-A1- 2 993 526
- US-A1- 2017 253 201

## Description

La présente invention se rapporte à un procédé de dégivrage d'une surface vitrée d'un véhicule. Elle trouve une application particulière mais non limitative dans les véhicules automobiles.

Il est connu de l'homme du métier un procédé dégivrage d'une surface vitrée d'un véhicule, ledit véhicule comprenant un dispositif de dégivrage comprenant au moins un réservoir contenant un liquide de dégivrage, au moins un balai d'essuyage, un dispositif de pulvérisation du liquide de dégivrage sur la surface vitrée. Le procédé de dégivrage comprend l'activation d'un moteur d'entraînement dudit au moins un balai d'essuyage du dispositif de dégivrage pour lancer un cycle de dégivrage et pulvériser ainsi le liquide de dégivrage sur la surface vitrée.

Un inconvénient de cet état de la technique antérieur est que ledit procédé de dégivrage nécessite l'intervention humaine, puisque c'est l'utilisateur qui déclenche manuellement à sa demande (à distance ou non) le procédé de dégivrage. La présente invention vise à proposer un procédé de dégivrage d'une surface vitrée d'un véhicule qui soit automatique et autonome dans lequel l'intervention humaine n'est plus nécessaire.

Un exemple de procédé de dégivrage d'une surface vitrée d'un véhicule automatique est décrit dans le document DE102009051263A1.

A cet effet, l'invention propose un procédé de dégivrage d'une surface vitrée de véhicule, ledit véhicule comprenant un dispositif de dégivrage comprenant un système de d'essuyage avec au moins un dispositif de pulvérisation d'un liquide, caractérisé en ce que ledit procédé de dégivrage comprend les étapes de:
- vérifier une condition primaire selon laquelle le contact dudit véhicule est activé,
- vérifier une condition secondaire selon laquelle la température extérieure est en dessous d'un seuil de température,
- vérifier une condition tertiaire selon laquelle une fonction de désembuage est activée,
- vérifier une condition quaternaire selon laquelle une personne est présente sur un siège conducteur dudit véhicule,
- si l'ensemble desdites conditions est rempli, alors activer ledit dispositif de dégivrage pour lancer un cycle de dégivrage, ledit cycle de dégivrage comprenant une pulvérisation par ledit au moins un dispositif de pulvérisation dudit liquide sur ladite surface vitrée,
- exécuter par ledit dispositif de dégivrage ledit cycle de dégivrage.

Le procédé de dégivrage d'une surface vitrée de véhicule selon l'invention permet ainsi de lancer le dégivrage de la surface vitrée du véhicule de manière automatique lorsque cela est nécessaire, à savoir en présence de givre sur ladite surface vitrée et lorsque le véhicule va être sur le point d'être utilisé.

Selon des modes de réalisation non limitatifs, ledit procédé de dégivrage d'une surface vitrée d'un véhicule peut comporter en outre une ou plusieurs caractéristiques supplémentaires prises seules ou selon toutes les combinaisons techniquement possibles, parmi les suivantes.

Selon un mode de réalisation non limitatif, ledit seuil de température est compris dans la plage 3°à 5°Celsius.

Selon un mode de réalisation non limitatif, ladite condition tertiaire comprend l'activation de la fonction de désembuage et son réglage sur un palier maximum.

Selon un mode de réalisation non limitatif, ledit cycle de dégivrage comprend une pulvérisation d'un liquide de dégivrage.

Selon un mode de réalisation non limitatif, ledit cycle de dégivrage comprend une pulvérisation d'un liquide chauffé.

Selon un mode de réalisation non limitatif, ledit système d'essuyage comprend en outre au moins un balai d'essuyage et au moins une rampe hydraulique qui forme ledit au moins un dispositif de pulvérisation disposée au niveau du balai d'essuyage.

Selon un mode de réalisation non limitatif, ledit véhicule comprend un contacteur-démarreur et le contact dudit véhicule est activé si ledit contacteur-démarreur est en position d'allumage des accessoires.

Selon un mode de réalisation non limitatif, ledit seuil de température est égal à 4° Celsius.

Selon un mode de réalisation non limitatif, le liquide chauffé est de l'eau ou un liquide lave-glace.

Selon un mode de réalisation non limitatif, le dispositif de mesure de température comprend un ou plusieurs capteurs de température ou est un serveur météorologique.

Il est en outre également proposé un système de dégivrage d'une surface vitrée d'un véhicule, ledit système de dégivrage comprenant un dispositif de dégivrage comprenant un système de d'essuyage avec au moins un dispositif de pulvérisation d'un liquide sur une surface vitrée d'un véhicule, caractérisé en ce que ledit dispositif de dégivrage est configuré pour exécuter un cycle de dégivrage, ledit cycle de dégivrage comprenant une pulvérisation par ledit au moins un dispositif de pulvérisation dudit liquide sur ladite surface vitrée, et en ce que ledit système de dégivrage comprend en outre:
- un dispositif de mesure de température configuré pour mesurer la température extérieure, et
- une unité de commande électronique configurée pour :
   - recevoir une information primaire relative à un contact dudit véhicule,
   - en fonction de cette information primaire, vérifier une condition primaire selon laquelle le contact du véhicule est activé,
   - recevoir une information secondaire relative à une température extérieure,
   - en fonction de cette information secondaire, vérifier une condition secondaire selon laquelle la température extérieure est en dessous d'un seuil de température,
   - recevoir une information tertiaire relative à une fonction de désembuage,
   - en fonction de cette information tertiaire, vérifier une condition tertiaire selon laquelle la fonction de désembuage est activée,
   - recevoir une information quaternaire relative à la présence d'une personne sur un siège conducteur du véhicule,
   - en fonction de cette information quaternaire, vérifier une condition quaternaire selon laquelle une personne est présente sur ledit siège conducteur,
   - si l'ensemble desdites conditions est rempli, alors activer ledit dispositif de dégivrage pour lancer un cycle de dégivrage.

Il est en outre également proposé un produit programme d'ordinateur comprenant des instructions qui, lorsque le programme est exécuté par un ordinateur, conduisent celui-ci à mettre en oeuvre les étapes du procédé de dégivrage selon l'une quelconque des caractéristiques précédentes.

Il est en outre également proposé un support de stockage non transitoire lisible par ordinateur comprenant des instructions qui, lorsqu'elles sont exécutées par un ordinateur, amènent l'ordinateur à exécuter le procédé de dégivrage selon l'une quelconque des caractéristiques précédentes.

L'invention et ses différentes applications seront mieux comprises à la lecture de la description qui suit et à l'examen des figures qui l'accompagnent :
[Fig. 1] est un organigramme d'un procédé de dégivrage d'une surface vitrée d'un véhicule, selon un mode de réalisation non limitatif de l'invention,
[Fig. 2] est un organigramme du procédé de dégivrage de la figure 1, ledit procédé de dégivrage comprenant une étape supplémentaire, selon un mode de réalisation non limitatif,
[Fig. 3] est une figure schématique d'un système de dégivrage configuré pour mettre en oeuvre ledit procédé de dégivrage des figures 1 et 2, selon un mode de réalisation non limitatif,
[Fig. 4] est une figure schématique d'un dispositif de dégivrage du système de dégivrage de la figure 3 d'une surface vitrée d'un véhicule, ledit dispositif de dégivrage étant activé par ledit procédé de dégivrage des figures 1 et 2, selon un mode de réalisation non limitatif.

Les éléments identiques, par structure ou par fonction, apparaissant sur différentes figures conservent, sauf précision contraire, les mêmes références.

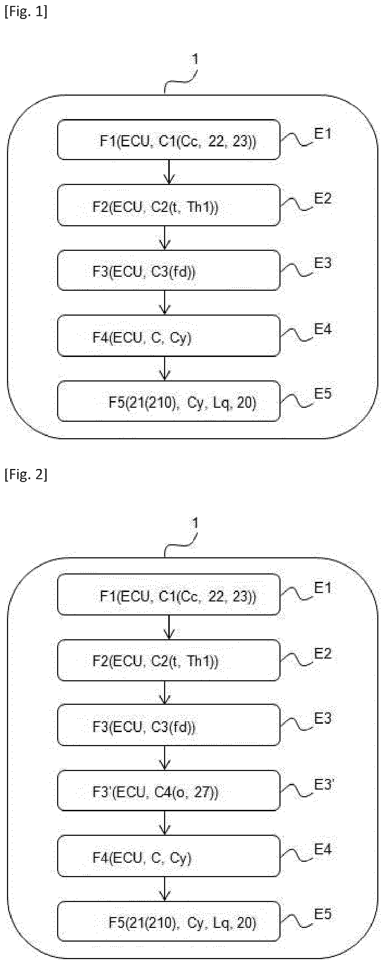

Le procédé de dégivrage 1 d'une surface vitrée 20 d'un véhicule 2 selon l'invention est décrit en référence aux figures 1 à 4 selon des modes de réalisation non limitatifs. Dans un mode de réalisation non limitatif, le véhicule 2 est un véhicule automobile. Par véhicule automobile, on entend tout type de véhicule motorisé. Ce mode de réalisation est pris comme exemple non limitatif dans la suite de la description. Dans la suite de la description, le véhicule 2 est ainsi autrement appelé véhicule automobile 2. Dans un mode de réalisation non limitatif, la surface vitrée 20 est la surface vitrée du pare-brise du véhicule 2.

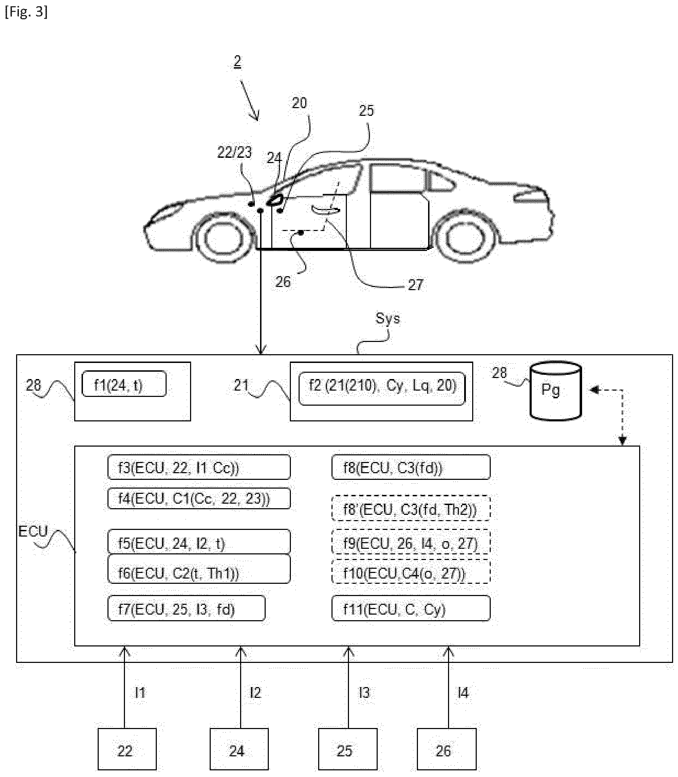

Le véhicule automobile 2 est illustré sur la figure 3.

Tel qu'illustré sur la figure 3, le véhicule automobile 2 comprend en outre un dispositif de dégivrage 21 configuré pour dégivrer la surface vitrée 20 du véhicule automobile 2. Tel qu'illustré sur la figure 3, le véhicule automobile 2 comprend en outre un contacteur-démarreur 22 et des accessoires 23. Tel qu'illustré sur la figure 3, le véhicule automobile 2 comprend en outre un dispositif de mesure de température 24 configuré pour mesurer la température extérieure t. Dans un exemple non limitatif illustré sur la figure 3, il se trouve au niveau d'un rétroviseur du véhicule automobile 2. Tel qu'illustré sur la figure 3, le véhicule automobile 2 comprend en outre une interface homme-machine 25 associée à une fonction de désembuage fd. Dans un exemple non limitatif, l'interface homme-machine 25 est un bouton rotatif qui permet d'activer/désactiver la fonction de désembuage mais également de choisir les paliers de désembuage, à savoir régler la puissance de désembuage. Tel qu'illustré sur la figure 3, dans un mode de réalisation selon l'invention, le véhicule automobile 2 comprend en outre au moins un capteur de présence 26 situé au niveau du siège conducteur 27 du véhicule automobile 2. Il permet de détecter si une personne o est assise ou non sur le siège conducteur 27, donc le siège conducteur 27 est occupé ou non.

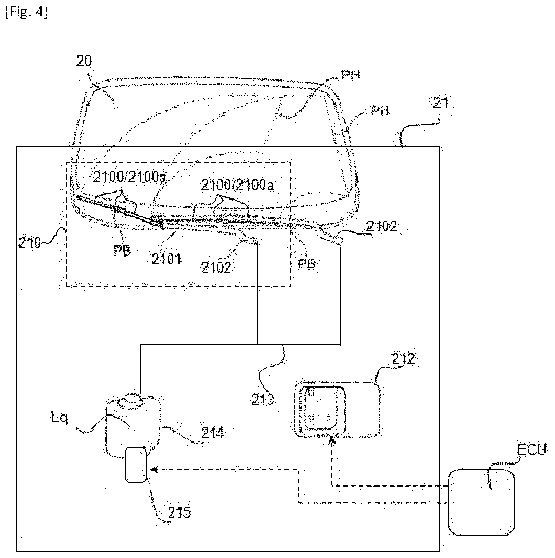

Tel qu'illustré sur la figure 4, le dispositif de dégivrage 21 comprend :
- un système d'essuyage 210,
- un moteur d'entraînement 212,
- un système de canalisation 213,
- un réservoir 214 de stockage d'un liquide L, Lq,
- au moins une pompe 215.

Tel qu'illustré sur la figure 4, ledit système d'essuyage 210 comprend :
- au moins un dispositif de pulvérisation 2100 ayant au moins un orifice 2100a au travers duquel le liquide L, Lq peut être projeté sur la surface vitrée 20,
- au moins un balai d'essuyage 2101 (autrement appelé balai), et
- un bras d'entraînement 2102 (autrement appelé bras) relié audit au moins un balai d'essuyage 2101 via un dispositif de connexion (non illustré).

Le système d'essuyage 210 utilisé pour le dégivrage est le même que celui utilisé pour évacuer l'eau et les salissures de la surface vitrée 20.

Dans un mode de réalisation non limitatif illustré, le système d'essuyage 210 comprend au moins un bras d'entraînement 2102 qui relié au balai d'essuyage 2101 effectue un mouvement de va-et-vient angulaire en vis-à-vis de la surface vitrée 20 entre une position basse PB et une position haute PH.

Le bras d'entraînement 2102 est notamment agencé en une tige qui s'étend selon un axe longitudinal et dont une extrémité est reliée au balai d'essuyage 2101 par l'intermédiaire d'un dispositif de connexion (non illustré) et dont une autre extrémité est reliée à un moyen d'entraînement du balai d'essuyage 2101 tel qu'un moteur d'entraînement 212.

Dans des modes de réalisation non limitatifs, ledit au moins un dispositif de pulvérisation 2100 se trouve sur le balai d'essuyage 2101, ou au niveau du bras d'entraînement 2102, ou au niveau du dispositif de connexion bras/balai, ou encore sur le capot du véhicule automobile 2. On peut avoir une combinaison de ces différents modes. Dans un mode de réalisation non limitatif, le dispositif de pulvérisation 2100 comprend une pluralité d'orifices 2100a. Ainsi, dans des modes de réalisation non limitatifs, les orifices 2100a se trouvent sur le balai d'essuyage 2101, ou au niveau du bras d'entraînement 2102, ou au niveau du dispositif de connexion bras/balai, ou encore sur le capot du véhicule automobile 2. Les orifices 2100a peuvent être disposés de manière à projeter du liquide L, Lq vers le haut des balais d'essuyage 2101, c'est-à-dire vers le haut de la surface vitrée 20, ou ils peuvent être disposés de manière à projeter du liquide L, Lq vers le bas des balais d'essuyage 2101, c'est-à-dire vers le bas de la surface vitrée 20.

Dans un mode de réalisation non limitatif, chaque balai d'essuyage 2101 comprend au moins une rampe hydraulique (autrement appelée rampe) ayant des orifices 2100a au travers desquels le liquide L, Lq peut être projeté/étalé sur la surface vitrée 20. La rampe hydraulique forme ainsi le dispositif de pulvérisation 2100. Dans une variante de réalisation non limitative, chaque balai d'essuyage 2101 comprend deux rampes, l'une des rampes possédant des orifices 2100a configurés pour projeter le liquide L, Lq vers le haut de la surface vitrée 20, l'autre rampe possédant des orifices 2100a configurés pour projeter le liquide L, Lq vers le bas de la surface vitrée 20. Ces rampes peuvent projeter le liquide de façon simultanée ou en alternance selon le sens de déplacement du balai d'essuyage 2101. La ou chaque rampe d'un balai d'essuyage 2101 est alimentée en liquide L, Lq par l'intermédiaire du système de canalisations 213.

Le moteur d'entraînement 212 est configuré pour entraîner le ou les balais d'essuyage 2101, par l'intermédiaire des bras d'entrainement 2102, entre leurs positions basses PB et leurs positions hautes PH respectives.

Le système de canalisation 213 relie le réservoir 214 aux orifices 2100a dudit au moins un dispositif de pulvérisation 2100.

Dans un mode de réalisation non limitatif, le réservoir 214 est un réservoir indépendant du réservoir comprenant du liquide lave-glace, chaque réservoir étant associée à une pompe différente. Dans un autre mode de réalisation non limitatif, le réservoir 214 peut être cloisonné et comprendre deux compartiments de stockage respectif de liquide L, Lq et de liquide lave-glace, chaque compartiment étant associée à une pompe différente.

Ladite au moins une pompe 215 est associée au réservoir 214 comprenant le liquide L, Lq et est configurée pour faire circuler le liquide L, Lq dans le système de canalisation 213 jusqu'à éjection par l'orifice(s) 2100a dudit au moins un dispositif de pulvérisation 2100 sur la surface vitrée 20, à savoir la surface vitrée 20 du pare-brise dans l'exemple non limitatif pris.

Pour appliquer le liquide L, Lq sur la surface vitrée du véhicule 2, le procédé de dégivrage 1 est décrit ci-après en référence aux figures 1 et 2 selon un mode de réalisation non limitatif. Le procédé de dégivrage 1 est mis en oeuvre par un système de dégivrage Sys qui comprend une unité de commande électronique ECU (appelée « Electronic Control Unit » en anglais).

L'unité de commande électronique ECU est configurée pour vérifier les conditions C suivantes :
- si le contact Ce dudit véhicule 2 est activé,
- si la température extérieure t est en dessous d'un seuil de température Th1,
- si une fonction de désembuage fd est activée.

Ainsi, dans une étape E1 illustrée F1(ECU, C1(Cc, 22, 23)), l'unité de commande électronique ECU vérifie une condition primaire C1 selon laquelle le contact Ce dudit véhicule automobile 2 est activé.

L'unité de commande électronique ECU vérifie la température extérieure t via une information de contact I1 qu'elle reçoit du contacteur-démarreur 22. On notera que le contact Ce dudit véhicule 2 est activé si le contacteur-démarreur 22 est en position d'allumage des accessoires 23. On notera que si le contact Ce du véhicule 2 est activé, cela signifie que le véhicule 2 est utilisé et va bientôt rouler. Il en est de même si le siège conducteur 27 est occupé.

Ainsi, dans une étape E2 illustrée F2(ECU, C2(t,Th1)), l'unité de commande électronique ECU vérifie une condition secondaire C2 selon laquelle la température extérieure t est en dessous d'un seuil de température Th1.

L'unité de commande électronique ECU vérifie la température extérieure t via une information de température I2 qu'elle reçoit du dispositif de mesure de température 24. Dans un mode de réalisation non limitatif, le seuil de température Th1 est compris entre 3° et 5° Celsius. Dans une variante de réalisation non limitative, le seuil de température Th1 est égal à 4°. Cette valeur de température extérieure t correspond en général à la température en dessous de laquelle le givre se forme.

Ainsi, dans une étape E3 illustrée F3(ECU, C3(fd)), l'unité de commande électronique ECU vérifie une condition tertiaire C3 selon laquelle une fonction de désembuage fd est activée.

L'unité de commande électronique ECU vérifie si la fonction de désembuage fd est activée via une information de désembuage I3 qu'elle reçoit de l'interface homme-machine 25 qui permet l'activation/la désactivation de cette fonction de désembuage fd. Cette fonction de désembuage fd est une aide pour le dégivrage de la surface vitrée 20. Lorsque la fonction de désembuage fd est activée, cela active une soufflerie qui envoie de l'air sur la surface vitrée 20 depuis l'intérieur du véhicule automobile 2.

Dans un mode de réalisation non limitatif, la condition tertiaire C3 comprend l'activation de la fonction de désembuage fd et son réglage sur un palier maximum Th2, autrement appelé palier de désembuage maximum Th2. Ainsi, dans un mode de réalisation non limitatif, l'unité de commande électronique ECU vérifie la condition tertiaire C3 selon laquelle la fonction de désembuage fd est activée et réglée sur le palier maximum Th2.

Dans un mode de réalisation non limitatif, le palier de désembuage maximum Th2 est le dernier palier correspondant à la puissance de désembuage maximum.

Dans un mode de réalisation selon l'invention, l'unité de commande électronique ECU est en outre configurée pour vérifier si le siège conducteur 27 est occupé.

Ainsi, dans un mode de réalisation selon l'invention, illustré sur la figure 2, dans une étape E3' illustrée F3'(ECU, C4(o, 27)), l'unité de commande électronique ECU vérifie une condition quaternaire C4 selon laquelle une personne o est présente sur ledit siège conducteur 27 dudit véhicule automobile 2.

On notera que les étapes E1 à E3, et le cas échéant E3' peuvent être effectuées simultanément ou de façon séquentielle selon n'importe quel ordre, ou certaines simultanément et d'autres de façon séquentielle selon n'importe quel ordre.

Dans une étape E4 illustrée sur la figure 1 et la figure 2 F4(ECU, C, Cy), si l'ensemble des conditions C est rempli, alors l'unité de commande électronique ECU active ledit dispositif de dégivrage 21 pour lancer un cycle de dégivrage Cy. Par activation du dispositif de dégivrage 21, on entend que l'unité de commande électronique ECU envoie une commande au dispositif de dégivrage 21 pour piloter la pompe 215 et pour piloter le moteur d'entraînement 212.

Ainsi, pour lancer le cycle de dégivrage Cy, il faut que :
- le contact Ce dudit véhicule 2 soit activé, et
- la température extérieure t soit en dessous d'un seuil de température Th1, et
- la fonction de désembuage fd soit activée.

Dans le cas où la condition C4 est également vérifiée, il faut que :
- le contact Ce dudit véhicule 2 soit activé, et
- la température extérieure t soit en dessous d'un seuil de température Th1, et
- la fonction de désembuage fd soit activée, et
- qu'il y ait une personne o assise sur le siège conducteur 27.

On notera que s'il n'y a personne sur le siège conducteur 27, cela signifie que la personne est en train de dégivrer à la main. L'unité de commande électronique ECU ne lance pas le cycle de dégivrage Cy.

L'activation du dispositif de dégivrage 21 comprend :
- l'activation du moteur d'entraînement 212 qui permet d'entraîner le balai d'essuyage 2101 du système d'essuyage 210,
- l'activation de la pompe 215 qui permet de faire circuler le liquide L, Lq dans le système de canalisation 213 jusqu'à son éjection par le ou les orifices 2100a du ou des dispositifs de pulvérisation 2100 sur la surface vitrée 20.

Dans une étape E5 illustrée sur la figure 1 et la figure 2 F5(21(210), Cy, L, Lq, 20), le cycle de dégivrage Cy est ainsi exécuté. Il est exécuté par le dispositif de dégivrage 21. Le cycle de dégivrage Cy comprend une pulvérisation par ledit au moins un dispositif de pulvérisation 2100 dudit liquide L, Lq sur ladite surface vitrée 20.

Dans un premier mode de réalisation non limitatif, ledit cycle de dégivrage Cy comprend une pulvérisation d'un liquide de dégivrage L. Dans un deuxième mode de réalisation non limitatif, ledit cycle de dégivrage Cy comprend une pulvérisation d'un liquide Lq chauffé. Dans des exemples non limitatifs, le liquide Lq qui est chauffé est de l'eau ou du liquide lave-glace. A cet effet, des éléments chauffants (non illustrés) sont utilisés pour chauffer ledit liquide Lq. Ce deuxième mode de réalisation non limitatif permet de ne pas utiliser de liquide Lq spécifique pour le dégivrage tel qu'un liquide de dégivrage L. Ainsi, le réservoir utilisé pour la fonction d'essuyage standard destinée à évacuer l'eau et les salissures de la surface vitrée 20 peut être utilisé comme réservoir 214 utilisé pour le dégivrage. Cela évite d'avoir un réservoir supplémentaire. On réduit ainsi l'encombrement dans le véhicule automobile 2. Dans un mode de réalisation non limitatif, une ou plusieurs résistances chauffantes sont plongées dans le réservoir 214 de stockage de liquide Lq pour réchauffer ledit liquide Lq. Dans un autre mode de réalisation non limitatifs, un ou plusieurs éléments chauffants sont noyés dans les parois des conduites situées entre dans le réservoir 214 de stockage de liquide Lq et les orifices 2100a de projection du liquide Lq.

Ainsi, grâce au test sur les conditions C1 à C3, et le cas échéant C4, un dégivrage de la surface vitrée 20 du véhicule automobile 2 peut être lancé, à savoir exécuté, et ce de façon automatique et autonome sans qu'une personne ne soit obligée d'intervenir. On dégivre ainsi la surface vitrée 20 du véhicule automobile 2 avant que le véhicule automobile 2 ne se mette à rouler. Cela permet de rendre rapidement opérationnel le véhicule automobile 2.

Ainsi, le procédé de dégivrage 1 est mis en oeuvre par un système de dégivrage Sys d'une surface vitrée 20 d'un véhicule 2. Le système de dégivrage Sys est illustré sur la figure 3.

Le système de dégivrage Sys comprend :
- un dispositif de mesure de température 24 configuré pour mesurer la température extérieure t (fonction illustrée f1(24, t)),
- ledit dispositif de dégivrage 21 comprenant un système d'essuyage 210 avec au moins un dispositif de pulvérisation 2100, ledit dispositif de dégivrage 21 étant configuré pour exécuter un cycle de dégivrage Cy, ledit cycle de dégivrage Cy comprenant une pulvérisation par ledit au moins un dispositif de pulvérisation 2100 dudit liquide L, Lq sur ladite surface vitrée 20 (fonction illustrée f2(21(210), Cy, L, Lq, 20)), et
- ladite unité de commande électronique ECU.

Les fonctions de l'unité de commande électronique ECU sont illustrées sur la figure 3.

L'unité de commande électronique ECU est configurée pour coopérer avec le contacteur-démarreur 22. L'unité de commande électronique ECU est ainsi configurée pour :
- recevoir une information primaire I1 relative à un contact Ce dudit véhicule 2 (fonction f3(ECU, 22, I1, Cc)). L'information primaire I1 est autrement appelée information de contact I1 ;
- en fonction de cette information primaire I1, vérifier si le contact Ce du véhicule 2 est activé (fonction f4(ECU, C1(Cc, 22, 23))). Ainsi, l'unité de commande électronique ECU vérifie la condition primaire C1.

Ainsi, l'unité de commande électronique ECU reçoit du contacteur-démarreur 22 cette information primaire I1.

En outre, l'unité de commande électronique ECU est configurée pour coopérer avec ledit dispositif de mesure de température 24 pour récupérer la température extérieure t. Dans des modes de réalisations non limitatifs, le dispositif de mesure de température 24 comprend un ou plusieurs capteurs de température ou est un serveur météorologique. Dans des exemples non limitatifs, ledit au moins un capteur de température est placé dans un rétroviseur, dans le compartiment moteur du véhicule automobile 2 etc. L'unité de commande électronique ECU est ainsi configurée pour :
- recevoir une information secondaire I2 relative à la température extérieure t (fonction f5(ECU, 24, I2, t)). Cette information secondaire I2 est autrement appelée information de température I2 ;
- en fonction de cette information primaire I2, vérifier si la température extérieure t est en dessous d'un seuil de température Th1 (fonction f6(ECU, C2(t, Th1))). Ainsi, l'unité de commande électronique ECU vérifie la condition secondaire C2.

Ainsi, l'unité de commande électronique ECU reçoit du ou de la pluralité de capteurs de température ou d'un serveur météorologique la valeur de ladite température extérieure t.

En outre, l'unité de commande électronique ECU est configurée pour coopérer avec l'interface homme-machine 25 utilisée pour la fonction de désembuage fd. L'unité de commande électronique ECU est ainsi configurée pour :
- recevoir une information tertiaire I3 relative à une fonction de désembuage fd (fonction f7(ECU, 25, I3, fd)). Cette information tertiaire I3 est autrement appelée information de désembuage I3 ;
- en fonction de cette information tertiaire I3, vérifier si la fonction de désembuage fd est activée (fonction f8(ECU, C3(fd))). Ainsi, l'unité de commande électronique ECU vérifie la condition tertiaire C3.
Dans un mode de réalisation non limitatif, l'unité de commande électronique ECU est configurée pour en fonction de cette information tertiaire I3, vérifier si la fonction de désembuage fd est activée et réglée sur le palier maximum Th2 (fonction f8'(ECU, C3(fd, Th2))).

Ainsi, l'unité de commande électronique ECU reçoit de l'interface homme-machine 25 l'information indiquant que la fonction de désembuage fd est activée et sur quel palier.

Enfin, dans un mode de réalisation selon l'invention, l'unité de commande électronique ECU est configurée pour coopérer avec au moins un capteur de présence 26 du véhicule automobile 2. Ainsi, l'unité de commande électronique ECU est configurée pour :
- recevoir une information quaternaire I4 relative à la présence d'une personne o sur un siège conducteur 27 du véhicule (fonction f9(ECU, 26, I4, o, 27)). Cette information quaternaire I4 est autrement appelée information de présence I4,
- en fonction de cette information quaternaire I4, vérifier si une personne o est présente sur le siège conducteur 27 (fonction f10(ECU, C4(o, 27))). Ainsi, l'unité de commande électronique ECU analyse l'information quaternaire I4 et en déduit s'il y a une personne sur le siège conducteur 27 ou non. Ainsi, l'unité de commande électronique ECU vérifie la condition quaternaire C4.

Ainsi, l'unité de commande électronique ECU reçoit du ou des capteurs de présence 26 l'information indiquant que le siège conducteur 27 est occupé ou non.

Les fonctions f8', f9 et f10 sont illustrées en pointillés sur la figure 3. Ainsi, l'unité de commande électronique ECU reçoit du ou de la pluralité de capteurs de présence l'information sur l'occupation du siège conducteur 27.

Enfin, si l'ensemble des conditions C est rempli, à savoir si la température extérieure t est en dessous du seuil de température Th1, si le contact Ce du véhicule 2 est activé et si la fonction de désembuage fd est activée, et s'il existe une personne o sur le siège conducteur 27, l'unité de commande électronique ECU est configurée pour activer ledit dispositif de dégivrage 21 pour lancer un cycle de dégivrage Cy (fonction f11(ECU, C, Cy)).

Ainsi, lorsqu'il est activé, le dispositif de dégivrage 21 exécute le cycle de dégivrage Cy (fonction f2 décrite précédemment).

On notera que l'information primaire I1, l'information secondaire I2, l'information tertiaire I3, et l'information quaternaire I4 sont transmises via le réseau véhicule. Dans des exemples non limitatifs, le réseau véhicule est un réseau CAN ou LIN.

On notera que le système de dégivrage Sys peut comporter un ou plusieurs produits programmes d'ordinateur Pg comportant une ou plusieurs séquences d'instructions exécutables par ladite l'unité de commande électronique ECU, l'exécution desdites séquences d'instructions permettant une mise en oeuvre du procédé de dégivrage 1 décrit.

Un tel programme d'ordinateur Pg peut être inscrit en mémoire non volatile inscriptible de type ROM ou en mémoire non volatile réinscriptible de type EEPROM ou FLASH. Ledit programme d'ordinateur Pg peut être inscrit en mémoire en usine ou encore chargé en mémoire ou téléchargé à distance en mémoire. Les séquences d'instructions peuvent être des séquences d'instructions machine, ou encore des séquences d'un langage de commande interprétées par l'unité électronique de commande ECU au moment de leur exécution. Dans l'exemple non limitatif de la figure 3, un programme d'ordinateur Pg est inscrit dans une mémoire 28 du système de dégivrage Sys.

Ainsi, le système de dégivrage Sys au moins une mémoire 28 qui est couplée à ladite l'unité de commande électronique ECU. La mémoire 28 est un support de stockage non transitoire lisible par ordinateur comprenant des instructions qui, lorsqu'elles sont exécutées par un ordinateur, amène l'ordinateur à exécuter ledit procédé de dégivrage 1.

Bien entendu la description de l'invention n'est pas limitée aux modes de réalisation décrits ci-dessus et au domaine décrit ci-dessus. Ainsi, dans un autre mode de réalisation non limitatif, le procédé de dégivrage 1 peut être appliqué également sur des surfaces vitrées 20 latérales des vitres latérales du véhicule 2. Ainsi, dans un autre mode de réalisation non limitatif, le procédé de dégivrage 1 peut être appliqué à une surface vitrée 20 de la vitre arrière du véhicule 2.

Ainsi, l'invention décrite présente notamment les avantages suivants :
- elle permet de vérifier les conditions dans lesquelles le dispositif de dégivrage 21 peut être activé, notamment lorsque le véhicule 2 est sur le point d'être utilisé (si le contact Ce du véhicule 2 activé, et si le siège conducteur 27 est occupé, lorsqu'il y a du givre, et lorsque la fonction de désembuage fd est utilisée,
- elle permet d'utiliser pour le dégivrage de la surface vitrée 20 le même système d'essuyage 210 qui est utilisé pour évacuer l'eau et les salissures de la surface vitrée 20,
- elle permet à l'utilisateur de gagner du temps car le dégivrage est lancé automatiquement sans l'intervention de l'utilisateur avant qu'il n'utilise le véhicule 2, le dégivrage prenant plusieurs minutes,
- elle est simple à mettre en oeuvre.

## Revendications

1. Procédé de dégivrage (1) d'une surface vitrée (20) d'un véhicule (2), ledit véhicule (2) comprenant un dispositif de dégivrage (21) comprenant un système de d'essuyage (210) avec au moins un dispositif de pulvérisation (2100) d'un liquide (L, Lq), ledit procédé de dégivrage (1) comprenant les étapes de:
- vérifier (E1) une condition primaire (C1) selon laquelle le contact (Cc) dudit véhicule (2) est activé,
- vérifier (E2) une condition secondaire (C2) selon laquelle la température extérieure (t) est en dessous d'un seuil de température (Th1),
- vérifier (E3) une condition tertiaire (C3) selon laquelle une fonction de désembuage (fd) est activée,
- vérifier (E3') une condition quaternaire (C4) selon laquelle une personne (o) est présente sur un siège conducteur (27) dudit véhicule (2),
- si l'ensemble desdites conditions est rempli, alors activer (E4) ledit dispositif de dégivrage (21) pour lancer un cycle de dégivrage (Cy), ledit cycle de dégivrage (Cy) comprenant une pulvérisation par ledit au moins un dispositif de pulvérisation (2100) dudit liquide (L, Lq) sur ladite surface vitrée (20),
- exécuter par ledit dispositif de dégivrage (21) ledit cycle de dégivrage (Cy).

2. Procédé de dégivrage (1) selon la revendication 1, selon lequel ledit seuil de température (Th1) est compris dans la plage 3°à 5°Celsius.

3. Procédé de dégivrage (1) selon l'une quelconque des revendications précédentes, selon lequel ladite condition tertiaire (C3) comprend l'activation de la fonction de désembuage (fd) et son réglage sur un palier maximum (Th2).

4. Procédé de dégivrage (1) selon l'une quelconque des revendications précédentes, selon lequel ledit cycle de dégivrage (Cy) comprend une pulvérisation d'un liquide de dégivrage (L).

5. Procédé de dégivrage (1) selon l'une quelconque des revendications précédentes 1 à 3, selon lequel ledit cycle de dégivrage (Cy) comprend une pulvérisation d'un liquide (Lq) chauffé.

6. Procédé de dégivrage (1) selon l'une quelconque des revendications précédentes, selon lequel ledit système d'essuyage (210) comprend en outre au moins un balai d'essuyage (2101) et au moins une rampe hydraulique qui forme ledit au moins un dispositif de pulvérisation (2100) disposée au niveau du balai d'essuyage (2101).

7. Procédé de dégivrage (1) selon l'une quelconque des revendications précédentes, selon lequel ledit véhicule (2) comprend un contacteur-démarreur (22) et le contact (Cc) dudit véhicule (2) est activé si ledit contacteur-démarreur (22) est en position d'allumage des accessoires (23).

8. Système de dégivrage (Sys) d'une surface vitrée (20) d'un véhicule (2), ledit système de dégivrage (Sys) comprenant un dispositif de dégivrage (21) comprenant un système de d'essuyage (210) avec au moins un dispositif de pulvérisation (2100) d'un liquide (L, Lq) sur une surface vitrée (20) d'un véhicule (2), ledit dispositif de dégivrage (21) est configuré pour exécuter un cycle de dégivrage (Cy), ledit cycle de dégivrage (Cy) comprenant une pulvérisation par ledit au moins un dispositif de pulvérisation (2100) dudit liquide (L, Lq) sur ladite surface vitrée (20), et ledit système de dégivrage (Sys) comprend en outre:
- un dispositif de mesure de température (24) configuré pour mesurer la température extérieure (t), et
- une unité de commande électronique (ECU) configurée pour :
- recevoir une information primaire (I1) relative à un contact (Cc) dudit véhicule (2),
- en fonction de cette information primaire (I1), vérifier une condition primaire (C1) selon laquelle le contact (Cc) du véhicule (2) est activé,
- recevoir une information secondaire (I2) relative à une température extérieure (t),
- en fonction de cette information secondaire (I2), vérifier une condition secondaire (C2) selon laquelle la température extérieure (t) est en dessous d'un seuil de température (Th1),
- recevoir une information tertiaire (I3) relative à une fonction de désembuage (fd),
- en fonction de cette information tertiaire (I3), vérifier une condition tertiaire (C3) selon laquelle la fonction de désembuage (fd) est activée,
- recevoir une information quaternaire (I4) relative à la présence d'une personne (o) sur un siège conducteur (27) du véhicule (2),
- en fonction de cette information quaternaire (I4), vérifier une condition quaternaire (C4) selon laquelle une personne (o) est présente sur ledit siège conducteur (27),
- si l'ensemble desdites conditions est rempli, alors activer ledit dispositif de dégivrage (21) pour lancer un cycle de dégivrage (Cy).

## Patentansprüche

1. Verfahren (1) zum Enteisen einer verglasten Oberfläche (20) eines Fahrzeugs (2), wobei das Fahrzeug (2) eine Enteisungsvorrichtung (21) umfasst, die ein Wischersystem (210) mit mindestens einer Vorrichtung (2100) zum Versprühen einer Flüssigkeit (L, Lq) umfasst, wobei das Enteisungsverfahren (1) die folgenden Schritte umfasst:
- Verifizierung (E1) eines primären Zustands (C1), bei dem die Zündung (Cc) des Fahrzeugs (2) aktiviert wird;
- Überprüfung (E2) einer Nebenbedingung (C2), wonach die Außentemperatur (t) unter einem Temperaturschwellenwert (Th1) liegt;
- Überprüfung (E3) einer tertiären Bedingung (C3), nach der eine Entstörungsfunktion (fd) aktiviert wird;
- Überprüfung (E3') eines quaternären Zustands (C4), wonach sich eine Person (o) auf einem Fahrersitz (27) des Fahrzeugs (2) befindet,
- wenn alle diese Bedingungen erfüllt sind, die Aktivierung (E4) der Enteisungsvorrichtung (21), um einen Enteisungszyklus (Cy) zu starten, wobei der Enteisungszyklus (Cy) das Sprühen der Flüssigkeit (L, Lq) auf die verglaste Oberfläche (20) durch die mindestens eine Vorrichtung (2100) umfasst;
- Ausführung des Enteisungszyklus (Cy) durch die Enteisungsvorrichtung (21).

2. Enteisungsverfahren (1) nach Anspruch 1, wobei die Temperaturschwelle (Th1) im Bereich von 3° bis 5°C liegt.

3. Enteisungsverfahren (1) nach einem der vorhergehenden Ansprüche, wobei die tertiäre Bedingung (C3) die Aktivierung der Entfeuchtungsfunktion (fd) und deren Einstellung auf ein maximales Niveau (Th2) umfasst.)

4. Enteisungsverfahren (1) nach einem der vorhergehenden Ansprüche, wobei der Enteisungszyklus (Cy) das Versprühen einer Enteisungsflüssigkeit (L) umfasst.)

5. Enteisungsverfahren (1) nach einem der vorhergehenden Ansprüche 1 bis 3, wobei der Enteisungszyklus (Cy) das Versprühen einer erhitzten Flüssigkeit (Lq) umfasst.)

6. Enteisungsverfahren (1) nach einem der vorhergehenden Ansprüche, **dadurch gekennzeichnet, dass** das Wischersystem (210) auch mindestens ein Wischblatt (2101) und mindestens eine hydraulische Rampe umfasst, die die mindestens eine Sprühvorrichtung (2100) bildet, die in Höhe des Wischblattes (2101) angeordnet ist.)

7. Enteisungsverfahren (1) nach einem der vorhergehenden Ansprüche, wobei das Fahrzeug (2) einen Zündanlassschalter (22) aufweist und die Zündung (Cc) des Fahrzeugs (2) aktiviert wird, wenn sich der Zündanlassschalter (22) in der Position für die Zündung des Zubehörs (23) befindet.)

8. System (Sys) zum Enteisen einer verglasten Oberfläche (20) eines Fahrzeugs (2), wobei das Enteisungssystem (Sys) eine Enteisungsvorrichtung (21) umfasst, die ein Wischersystem (210) mit mindestens einer Vorrichtung (2100) zum Sprühen einer Flüssigkeit (L, Lq) auf eine verglaste Oberfläche (20) eines Fahrzeugs (2) umfasst,) die Enteisungsvorrichtung (21) so konfiguriert ist, dass sie einen Enteisungszyklus (Cy) ausführt, wobei der Enteisungszyklus (Cy) das Sprühen der Flüssigkeit (L, Lq) auf die verglaste Oberfläche (20) durch die mindestens eine Vorrichtung (2100) umfasst, und das Enteisungssystem (Sys) außerdem umfasst:
- eine Temperaturmessvorrichtung (24), die so konfiguriert ist, dass sie die Außentemperatur (t) misst; und
- eine elektronische Steuereinheit (ECU), die so konfiguriert ist, dass sie:
- eine Primärinformation (I1) über eine Zündung (Cc) des Fahrzeugs (2) zu empfangen;
- gemäß dieser primären Information (I1) eine primäre Bedingung (C1) zu überprüfen, gemäß der die Zündung (Cc) des Fahrzeugs (2) aktiviert wird;
- sekundäre Informationen (I2) über die Außentemperatur (t) erhalten;
- gemäß dieser sekundären Information (I2) eine sekundäre Bedingung (C2) zu überprüfen, wonach die Außentemperatur (t) unter einem Temperaturschwellenwert (Th1) liegt;
- tertiäre Informationen (I3) über eine Demisting-Funktion (fd) empfangen;
- gemäß dieser tertiären Information (I3) eine tertiäre Bedingung (C3) zu überprüfen, gemäß der die Entnebelungsfunktion (fd) aktiviert wird;
- quaternäre Informationen (I4) über die Anwesenheit einer Person (o) auf einem Fahrersitz (27) des Fahrzeugs (2) zu empfangen,
- in Abhängigkeit von dieser quaternären Information (I4) eine quaternäre Bedingung (C4) prüfen, nach der eine Person (o) auf dem Fahrersitz (27) anwesend ist,
- wenn alle diese Bedingungen erfüllt sind, die Enteisungsvorrichtung (21) aktivieren, um einen Enteisungszyklus (Cy) zu starten.

## Claims

1. Process (1) for de-icing a glazed surface (20) of a vehicle (2), the said vehicle (2) comprising a de-icing device (21) comprising a wiper system (210) with at least one device (2100) for spraying a liquid (L, Lq), the said de-icing process (1) comprising the steps of:
- verification (E1) of a primary condition (C1) according to which the ignition (Cc) of the said vehicle (2) is activated;
- verification (E2) of a secondary condition (C2) according to which the exterior temperature (t) is below a temperature threshold (Th1);
- verification (E3) of a tertiary condition (C3) according to which a demisting function (fd) is activated;
- verification (E3') of a quaternary condition (C4) according to which a person (o) is present on a driver's seat (27) of said vehicle (2),
- if all of the said conditions are fulfilled, then activation (E4) of the said de-icing device (21) in order to start a de-icing cycle (Cy), the said de-icing cycle (Cy) comprising spraying by the said at least one device (2100) for spraying of the said liquid (L, Lq) onto the said glazed surface (20);
- execution by the said de-icing device (21) of the said de-icing cycle (Cy).

2. De-icing process (1) according to claim 1, wherein the said temperature threshold (Th1) is in the range from 3° to 5°C.

3. De-icing process (1) according to either one of the preceding claims, wherein the said tertiary condition (C3) comprises activation of the demisting function (fd) and adjustment thereof to a maximum level (Th2).

4. De-icing process (1) according to any one of the preceding claims, wherein the said de-icing cycle (Cy) comprises spraying of a de-icing liquid (L).

5. De-icing process (1) according to any one of the preceding claims 1 to 3, wherein the said de-icing cycle (Cy) comprises spraying of a heated liquid (Lq).

6. De-icing process (1) according to any one of the preceding claims, wherein the said wiper system (210) also comprises at least one wiper blade (2101) and at least one hydraulic ramp which forms the said at least one spraying device(2100) positioned at the level of the wiper blade (2101).

7. De-icing process (1) according to any one of the preceding claims, wherein the said vehicle (2) comprises an ignition-starter switch (22), and the ignition (Cc) of the said vehicle (2) is activated if the said ignition-starter switch (22) is in the position for ignition of the accessories (23).

8. System (Sys) for de-icing a glazed surface (20) of a vehicle (2), the said de-icing system (Sys) comprising a de-icing device (21) comprising a wiper system (210) with at least one device (2100) for spraying a liquid (L, Lq) onto a glazed surface (20) of a vehicle (2), the said de-icing device (21) is configured to execute a de-icing cycle (Cy), the said de-icing cycle (Cy) comprising spraying by the said at least one device (2100) for spraying of the said liquid (L, Lq) onto the said glazed surface (20), and the said de-icing system (Sys) also comprises:
- a temperature measurement device (24) which is configured to measure the exterior temperature (t); and
- an electronic control unit (ECU) which is configured to:
- receive primary information (I1) relating to an ignition (Cc) of the said vehicle (2);
- according to this primary information (I1), verify a primary condition (C1) according to which the ignition (Cc) of the vehicle (2) is activated;
- receive secondary information (I2) relating to an exterior temperature (t);
- according to this secondary information (I2), verify a secondary condition (C2) according to which the exterior temperature (t) is below a temperature threshold (Th1);
- receive tertiary information (I3) relating to a demisting function (fd);
- according to this tertiary information (I3), verify a tertiary condition (C3) according to which the demisting function (fd) is activated;
- receive quaternary information (I4) relating to the presence of a person (o) on a driver's seat (27) of the vehicle (2),
- depending on this quaternary information (I4), check a quaternary condition (C4) according to which a person (o) is present on said driver's seat (27),
- if all of the said conditions are fulfilled, then activate the said de-icing device (21) in order to start a de-icing cycle (Cy).
